# EUROPÄISCHE PATENTSCHRIFT

(11) **EP 3 997 337 B1**
(45) Veröffentlichungstag und Bekanntmachung des Hinweises auf die Patenterteilung: **13.03.2024**
(21) Anmeldenummer: 20736625.3
(22) Anmeldetag: 01.07.2020
(51) Int. Cl.: F04B 9/135, F04B 1/02, F04B 17/00, F03G 6/06

(54) **PUMPVORRICHTUNG**
PUMP DEVICE
DISPOSITIF DE POMPE

(30) Priorität: 08.07.2019 AT 2512019; 05.09.2019 AT 2882019
(43) Veröffentlichungstag der Anmeldung: 18.05.2022
(73) Patentinhaber: Daniel, Erwin, 1070 Wien (AT)
(72) Erfinder: Daniel, Erwin, 1070 Wien (AT)
(74) Vertreter: Beer & Partner Patentanwälte KG
(86) Internationale Anmeldenummer: PCT/EP2020/068477
(87) Internationale Veröffentlichungsnummer: WO 2021/004846

(56) Entgegenhaltungen:
- WO-A1-2014/171934
- CN-U- 203 272 045
- FR-E- 32 458
- US-A- 308 509
- US-A- 4 150 923

## Beschreibung

Die Erfindung betrifft eine Pumpvorrichtung, insbesondere zum Pumpen von Wasser, mit wenigstens einem ersten Zylinder und einem zweiten Zylinder, in denen jeweils ein Kolben mit einer damit verbundenen Kolbenstange verschiebbar geführt ist, wobei jeder der Zylinder ein vorderes Ende und ein hinteres Ende aufweist, wobei die Kolbenstangen jeweils am hinteren Ende aus den Zylindern austreten und derart miteinander gekoppelt sind, dass ein Verschieben des Kolbens eines der Zylinder zum hinteren Ende dieses Zylinders hin ein Verschieben des Kolbens des anderen Zylinders zu dessen vorderen Ende hin bewirkt und umgekehrt, und wobei jeweils im Bereich des hinteren Endes wenigstens ein Leitungsanschluss in jeden der Zylinder führt. Doppelkolbenpumpen sind allgemein bekannt und gewährleisten - anders als Einkolbenpumpen - beim Pumpen einer Flüssigkeit einen im Wesentlichen kontinuierlichen Flüssigkeitsstrom. Da die Kolben in zwei Zylindern gegengleich verschoben werden, wird wechselweise die Pumpflüssigkeit in einen der Zylinder hineingesaugt, während aus dem anderen Zylinder die darin befindliche Pumpflüssigkeit herausgepresst wird. Eine Doppelkolbenpumpe dieser Art ist aus der Druckschrift US-308509-A bekannt.

Bei herkömmlichen Doppelkolbenpumpen werden die mit den Kolben verbundenen Kolbenstangen über einen Antrieb in gegengleiche Richtung hin und her bewegt. Der Antrieb kann dafür manuell, beispielsweise durch eine Handhebelmechanik, oder über einen Motor, beispielsweise einen Elektromotor, erfolgen.

Pumpen, die autark, d.h. ohne an ein Stromnetz angeschlossen zu sein, betrieben werden können, werden in unterschiedlichsten Bereichen eingesetzt. Beispielsweise finden sie bei Bewässerungsanlagen Verwendung, bei denen die Pumpen dafür benutzt werden, Wasser über ein Leitungssystem aus einem Reservoir, z.B. einem Tank, einem See oder dem Grundwasser, anzusaugen und über eine Verteileinrichtung an Pflanzen abzugeben bzw. über eine Fläche zu verteilen.

Handbetriebene Pumpen sind im Wesentlichen autark, wobei das Betreiben derartiger Pumpen körperlich anstrengend ist und die Anwesenheit einer die Pumpe betreibenden Person vor Ort verlangt.

Durch Motoren, wie Elektromotoren oder Verbrennungskraftmotoren, betriebene, autarke Pumpen benötigen eine unabhängige Stromversorgung, wodurch sie für den Dauerbetrieb über mehrere Tage oder Wochen relativ ungeeignet sind. Überdies sind derartige Motoren störanfällig und müssen daher in regelmäßigen Abständen gewartet werden.

Der Erfindung liegt daher die Aufgabe zu Grunde, eine Pumpeinrichtung der eingangs genannten Gattung zur Verfügung zu stellen, die die Nachteile des Standes der Technik nicht aufweist. Insbesondere soll eine für den Dauerbetrieb geeignete Pumpe bereitgestellt werden, die automatisiert, jedoch ohne die Verwendung eines störanfälligen Motors, betrieben werden kann.

Gelöst wird diese Aufgabe erfindungsgemäß mit einer Pumpvorrichtung, die die Merkmale von Anspruch 1 aufweist.

Bevorzugte und vorteilhafte Ausführungsformen der Erfindung sind Gegenstand der Unteransprüche.

Erfindungsgemäß ist vorgesehen, dass in den Zylindern jeweils zwischen dem Kolben und dem vorderen Ende ein Arbeitsfluid, dem im Bereich des vorderen Endes über eine Wärmeeinrichtung Wärme zuführbar ist, aufgenommen ist, und dass die Zufuhr der Wärme durch eine Steuereinrichtung derart gesteuert ist, dass die Wärmezufuhr an das Arbeitsfluid des einen Zylinders unterbrochen ist, während dem Arbeitsfluid des anderen Zylinders Wärme zugeführt wird, und umgekehrt.

Dadurch, dass dem Arbeitsfluid eines der Zylinder Wärme zugeführt wird, dehnt sich dieses aus, sodass der Kolben des Zylinders vom vorderen Ende zum hinteren Ende geschoben wird. Durch die Kopplung der Kolben wird der Kolben des anderen Zylinders gleichzeitig vom hinteren zum vorderen Ende geschoben. Indem abwechselnd immer nur dem Arbeitsfluid eines der Zylinder Wärme zugeführt wird, während die Wärmezufuhr beim anderen Zylinder unterbrochen ist, kann die Doppelpumpe ohne Hilfe eines zusätzlichen Motors oder einer die Pumpe bedienenden Person betrieben werden.

Beim Verschieben des Kolbens zum hinteren Ende hin entsteht in dem Teil des Zylinders zwischen dem hinteren Ende und dem Kolben ein Überdruck. Pumpflüssigkeit, die sich in diesem Abschnitt des Zylinders befindet, wird aus dem Leitungsanschluss bzw. einem der Leitungsanschlüsse hinausgepresst. Beim Verschieben des Kolbens zum vorderen Ende hin entsteht zwischen dem hinteren Ende und dem Kolben ein Unterdruck. Dadurch wird Pumpflüssigkeit durch den Leitungsanschluss bzw. einen der Leitungsanschlüsse in den Zylinder hineingesaugt.

Im Rahmen der Erfindung ist eine Ausführungsform besonders bevorzugt, bei der die Steuereinrichtung mit den Kolben bzw. Kolbenstangen derart gekoppelt ist, dass bei jedem der Zylinder beim Verschieben des darin geführten Kolbens zum hinteren Ende die Wärmezufuhr an das Arbeitsfluid dieses Zylinders unterbrochen und beim Verschieben des Kolbens zum vorderen Ende die Wärmezufuhr freigegeben ist. Durch eine derartige Steuerung kann die Pumpeinrichtung in einem im Wesentlichen kontinuierlichen Pumpbetrieb betrieben werden.

Möglich ist im Rahmen der Erfindung auch, dass die Steuerung der Zufuhr der Wärme von der Position der Kolben unabhängig ist. Beispielsweise kann die Wärmezufuhr periodisch, d.h. einem bestimmten zeitlichen Takt folgend, zwischen den Zylindern wechseln.

Besonders bevorzugt sind Ausführungsformen, bei denen die Wärmeeinrichtung die Wärme mit Hilfe von Solarenergie bereitstellt. Dadurch kann die Pumpvorrichtung über längere Zeiträume vollkommen autark betrieben werden. Besonders günstig ist es dabei, wenn die erfindungsgemäße Pumpvorrichtung in einem Bewässerungssystem zum Einsatz kommt, da bei starker Sonneneinstrahlung viel bewässert werden muss, jedoch gleichzeitig auch genug Solarenergie zur Verfügung steht, um den dafür notwendigen Energiebedarf zu decken.

Möglich sind im Rahmen der Erfindung auch Ausführungsformen, bei denen die Wärmeeinrichtung die Wärme stattdessen oder zusätzlich mit Hilfe von Windkraft, z.B. über ein Windrad, und/oder Wasserkraft, z.B. über ein Wasserrad, und/oder Erdwärme bereitstellt. Vorteilhaft bei all diesen Ausführungsformen ist die Unabhängigkeit vom Stromnetz und die sich daraus ergebenden Einsatzmöglichkeiten in unterschiedlichen geographischen Lagen.

Gemäß einer vorteilhaften Ausführungsform ist vorgesehen, dass die Wärmeeinrichtung ein am vorderen Ende des jeweiligen Zylinders angeordnetes, elektrisch betriebenes Heizelement aufweist, und dass durch die Steuereinrichtung die Stromzufuhr zum Heizelement unterbrechbar bzw. herstellbar ist. Das hat den Vorteil, dass die Strom- und somit auch Wärmezufuhr, beispielsweise über Schalter, schnell und ohne großen konstruktiven Aufwand bzw. zusätzliche bewegliche Bauteile unterbrechbar ist. Heizelemente können sich sehr schnell erhitzen und kühlen auch rasch wieder ab, sodass eine Pumpvorrichtung entsprechend dieser Ausführungsform mit verhältnismäßig hoher Pumpfrequenz betrieben werden kann.

Beispielsweise weist das Heizelement eine am bzw. im vorderen Ende angeordnete Heizspule auf, die von außerhalb des Zylinders mit elektrischem Strom (z.B. mit Hilfe von Solarzellen erzeugt) gespeist wird und die in den mit dem Arbeitsfluid befüllten Innenbereich des Zylinders hineinragt.

Im Rahmen der Erfindung ist es auch möglich, dass das Heizelement dem Arbeitsfluid mit Hilfe hochfrequenter Schwingung/en (insbesondere Ultraschall) Wärme zuführt. Dass Heizelement weist dafür beispielsweise ein im Bereich des Arbeitsfluides anordenbares oder mit dem Arbeitsfluid in Kontakt bringbares Schwingelement auf, das derart in Schwingung versetzbar ist, dass dadurch dem Arbeitsfluid Wärme zugeführt wird. Mit derartigen Heizelementen lässt sich das Arbeitsfluid, beispielsweise unter Zufuhr von aus Solarenergie gewonnenem elektrischen Strom, sehr effektiv und schnell erwärmen.

Gemäß einer weiteren vorteilhaften Ausführungsform ist vorgesehen, dass die Wärmeeinrichtung ein bewegliches Heizelement aufweist, das durch die Steuereinrichtung an dem vorderen Ende anordenbar oder vom vorderen Ende entfernbar ist. Dem Arbeitsfluid ist somit Wärme vom Heizelement über das vordere Ende zuführbar, wobei die Zufuhr von Wärme durch Entfernen des Heizelementes unterbrochen werden kann. Das Heizelement einer derartig ausgeführten Pumpvorrichtung kann beispielsweise elektrisch (insbesondere über Solarstrom) oder thermisch (insbesondere über mit Sonnenstrahlen aufgewärmtes Wasser) erwärmt werden. Vorteilhaft an dieser Ausführungsform ist, dass das Heizelement nicht extra aufgeheizt und abgekühlt werden muss, und dass dem Arbeitsfluid sehr rasch durch Anordnen und Entfernen des Heizelementes am vorderen Ende Wärme zugeführt oder die Wärmezufuhr unterbrochen werden kann.

Gemäß noch einer weiteren vorteilhaften Ausführungsform ist vorgesehen, dass die Wärmeeinrichtung eines jeden Zylinders wenigstens ein Sammelelement aufweist, mit dem Sonnenstrahlen in gebündelter bzw. konzentrierter Form dem vorderen Ende zuführbar sind. Dadurch erwärmt sich der Zylinder im Bereich seines vorderen Endes und dem Arbeitsfluid wird Wärme zugeführt. Durch die Steuereinrichtung ist die Zufuhr von Sonnenstrahlen - und somit die Bereitstellung von Wärme an das Arbeitsfluid - unterbrechbar. Besonders vorteilhaft daran ist, dass eine derartige Ausführungsform nur selten gewartet werden muss, da sie kaum anfällig für Fehler bzw. Defekte ist.

Das Sammelelement ist beispielsweise ein konkaver Spiegel, der die Sonnenstrahlen auf das vordere Ende bündelt. Ebenso denkbar ist, dass das Sammelelement eine Linse ist, die die Sonnenstrahlen auf das vordere Ende fokussiert. Zum Unterbrechen der Wärmezufuhr kann durch die Steuereinrichtung eine Abschirmung oder Blende zwischen Spiegel bzw. Linse und vorderem Ende platziert werden, z.B. durch Verschwenken der Abschirmung. Denkbar ist jedoch auch, dass der Spiegel bzw. die Linse selbst verstellt, z.B. verschwenkt, wird, sodass die Sonnenstrahlen nicht zum vorderen Ende hin gelenkt werden.

Die Wärmeeinrichtung kann auch mehrere Spiegel oder Linsen oder eine Kombination aus Spiegeln und Linsen aufweisen. Weiters müssen die Sonnenstrahlen nicht zwingend direkt dem vorderen Ende zugeführt werden, sondern können beispielsweise eine Flüssigkeit in einem mit dem vorderen Ende verbundenen Flüssigkeitskreislauf erwärmen.

Im Rahmen der Erfindung kann die Steuereinrichtung mechanisch, insbesondere über ein Gestänge und/oder Zahnräder und/oder Riemen und/oder einen Seilzug, mit den Kolben bzw. Kolbenstangen gekoppelt sein. Derartige Verbindungen sind besonders robust gegen Umwelteinflüsse und lange haltbar.

Bevorzugt ist es jedoch - insbesondere dann, wenn die Wärme über elektrische Energie erzeugt wird -, wenn die Steuereinrichtung elektrisch bzw. elektronisch mit den Kolben bzw. Kolbenstangen gekoppelt ist. Derartige Verbindungen reagieren besonders schnell, lassen sich präzise regeln und kommen ohne zusätzliche, bewegliche Teile aus, die schneller verschleißen und einen zusätzlichen Energieaufwand erfordern.

Die Steuereinrichtung kann auch Stellmotoren antreiben, die z.B. Schalter ein- oder ausschalten bzw. Abschirmungen hinein- oder herausklappen.

Insbesondere ist im Rahmen der Erfindung eine Ausführungsform bevorzugt, bei der beabstandet vom vorderen Ende an oder um jeden der Zylinder eine Kühleinrichtung angeordnet ist, mit der dem Arbeitsfluid Wärme entzogen werden kann. Vorzugsweise ist die Kühleinrichtung wenigstens ein Viertel oder ein Drittel der Gesamtlänge des Zylinders von dessen vorderem Ende beabstandet. Dadurch muss der Kolben erst einen bestimmten Weg in Richtung hinteres Ende zurücklegen, bevor das Arbeitsfluid mit dem durch die Kühleinrichtung gekühlten Abschnitt der Zylinderwand in Kontakt kommt. Durch die Kühleinrichtung kann dem erwärmten und dadurch ausgedehnten Arbeitsfluid besonders rasch Wärme entzogen werden, sodass dieses schneller abkühlt und sich rascher zusammenzieht bzw. mit weniger Kraftaufwand zusammengepresst werden kann.

Die Kühleinrichtung jedes Zylinders weist beispielsweise wenigstens eine den jeweiligen Zylinder umschließende Leitung auf, durch die eine Kühlflüssigkeit geleitet wird. Diese Kühlflüssigkeit kann ein Teil der Pumpflüssigkeit sein, der beim Herauspressen der Pumpflüssigkeit aus den Zylindern über die Kühleinrichtungen geleitet wird. Zusätzlich oder stattdessen kann die Kühleinrichtung Kühlrippen aufweisen.

Bevorzugt sind Ausführungsformen, bei denen das Arbeitsfluid bei zugeführter Wärme zumindest teilweise gasförmig und bei entzogener Wärme zumindest teilweise flüssig ist. Beispielsweise kann das Arbeitsfluid ein bei Raumtemperatur flüssiger Stoff sein, der bei Zufuhr von Wärme verdampft und in einen gasförmigen Zustand übergeht. Derartige Fluide weisen eine hohe Wärmeausdehnung auf und lassen sich in flüssigem Zustand gut in die Zylinder einfüllen bzw. in den Zylindern speichern.

Ebenso bevorzugt sind Ausführungsformen, bei denen das Arbeitsfluid bei zugeführter und entzogener Wärme im Wesentlichen flüssig ist oder bei denen das Arbeitsfluid bei zugeführter und entzogener Wärme im Wesentlichen gasförmig ist.

Das Arbeitsfluid kann im Rahmen der Erfindung ein Reinstoff, beispielsweise ein im Wesentlichen reiner, bei Raumtemperatur flüssiger Stoff, ein reines Gas oder ein Stoffgemisch aus zwei oder mehr Stoffen (Gasmischung, Dispersion,
Flüssigkeitsgemisch), sein.

Vorzugsweise herrscht im Zylinder zwischen dem Kolben und dem vorderen Ende ein Unterdruck, wenn der Kolben des jeweiligen Zylinders in einer Endposition im Bereich des vorderen Endes angeordnet und das Arbeitsfluid in einem unausgedehnten Zustand ist. Bei Verwendung einer Flüssigkeit als Arbeitsfluid wird dadurch der Siedepunkt der Flüssigkeit herabgesetzt. Zusätzlich unterstützt der Unterdruck die Bewegung des Kolbens zum vorderen Ende hin. Wenn, bei einer derartigen Pumpvorrichtung, dem erwärmten und daher ausgedehnten Arbeitsfluid des einen Zylinders Wärme entzogen wird, zieht es sich zusammen (beispielsweise beim Wechsel vom gasförmigen zum flüssigen Aggregatzustand). Der in der Arbeitskammer dieses Zylinders gebildete Druck wird dadurch immer weiter verringert, bis in der Arbeitskammer ein Unterdruck entsteht. Der Kolben dieses Zylinders wird dann nicht nur durch die (über den Kolben des anderen Zylinders und die gekoppelten Kolbenstangen auf ihn übertragene) Druckkraft des sich ausdehnenden Arbeitsfluides des anderen Zylinders, sondern auch durch den Umgebungsdruck (der höher als der Unterdruck in der Arbeitskammer des Zylinders ist) vom hinteren zum vorderen Ende des Zylinders verschoben. Mit der Pumpvorrichtung kann daher schneller und effektiver gepumpt werden.

Damit zwischen dem Kolben und dem vorderen Ende des Zylinders eine Kammer gebildet ist, liegt der Kolben in seiner Endposition im Bereich des vorderen Endes - d.h. in einer Position im Zylinder, in der der Kolben nicht weiter in Richtung vorderes Ende verschiebbar ist - nicht direkt am vorderen Ende an. Für diesen Zweck kann beispielsweise im Zylinder eine Innenschulter vorgesehen sein, an der der Kolben in seiner Endposition anliegt. Möglich ist im Rahmen der Erfindung jedoch auch, dass die Kolbenstange (z.B. aufgrund eines daran angeordneten Querflansches) nur bis zu einer bestimmten Länge in den Zylinder eingefahren werden kann. Bei dieser Ausführungsform ist es möglich, zuerst das Arbeitsfluid in den Zylinder einzufüllen, dann die Kolbenstange ein Stück aus dem Zylinder herauszuziehen, um einen Unterdruck zwischen Kolben und vorderem Ende zu erzeugen, und anschließend die Kolbenstange gegen einen möglichen Rückeinzug in den Zylinder zu sichern.

Weiters kann im Rahmen der Erfindung vorgesehen sein, dass die Zylinder gleich ausgerichtet, insbesondere nebeneinander angeordnet, sind. Gleich ausgerichtet bedeutet im Sinne der Erfindung, dass das vordere Ende des einen Zylinders auf der selben Seite wie das vordere Ende des anderen Zylinders angeordnet ist. Den Zylindern muss bei einer derartigen Anordnung beispielsweise nur von einer Seite her Wärme zugeführt werden.

Ebenso kann im Rahmen der Erfindung vorgesehen sein, dass die Zylinder gegengleich ausgerichtet, insbesondere in einer Linie angeordnet, sind. Bei einer derartigen Anordnung lassen sich die Kolbenstangen besonders einfache miteinander koppeln (z.B. direkt).

Bevorzugt ist es, wenn die Kolbenstangen über ein bewegliches Gestänge und/oder Zahnräder und/oder Riemen und/oder einen Seilzug miteinander gekoppelt sind. Eine derartige Kopplung ermöglicht, insbesondere bei nebeneinander angeordneten Zylindern, auf einfache Art und Weise das Bewegen der Kolben bzw. Kolbenstangen in gegensätzliche Richtungen.

In einer weiteren Ausführungsform sind die Kolbenstangen über eine im Wesentlichen starre Kupplung bzw. ein starres Gestänge direkt miteinander gekoppelt oder jeweils ein Teilabschnitt einer einzigen, die Kolben beider Zylinder verbindenden, Kolbenstange. Insbesondere wenn die Zylinder in einer Linie angeordnet sind, kann dadurch auf einen Koppelmechanismus mit zusätzlichen, beweglichen Teilen verzichtet werden.

Im Rahmen der Erfindung kann vorgesehen sein, dass ein einzelner Leitungsanschluss pro Zylinder vorhanden ist, an dem eine Zwischenleitung angeschlossen ist. Die Zwischenleitung ist (z.B. über eine Strömungsweiche) mit einer Zuleitung, über die eine Pumpflüssigkeit ansaugbar, und einer Ableitung, über die die Pumpflüssigkeit ableitbar ist, verbindbar. Es kann jedoch auch vorgesehen sein, dass wenigstens zwei Leitungsanschlüsse vorhanden sind. Bei einer derartigen Ausführungsform ist einer der Leitungsanschlüsse mit einer Zuleitung, über die eine Pumpflüssigkeit ansaugbar, und der andere der Leitungsanschlüsse mit einer Ableitung, über die die Pumpflüssigkeit ableitbar ist, verbindbar.

Vorzugsweise blockiert ein erstes Rückschlagventil die Zuleitung beim Verschieben des Kolbens zum hinteren Ende, und ein zweites Rückschlagventil die Ableitung beim Verschieben des Kolbens zum vorderen Ende. Derartige Rückschlagventile sind günstiger und wartungsärmer als gesteuerte Ventile. Die Ventile können beispielsweise - falls vorhanden - in der Zwischenleitung, in der Ab- und Zuleitung oder ggf. in den Leitungsanschlüssen angeordnet sein.

Im Rahmen der Erfindung sind auch Ausführungsformen denkbar, bei denen die Kolbenstangen derart mechanisch mit wenigstens einer weiteren Einrichtung verbunden sind, dass diese weitere Einrichtung durch die Bewegung der Kolbenstangen antreibbar bzw. betreibbar ist. Die weitere Einrichtung kann beispielsweise eine Gestängepumpe sein, mit deren Hilfe Wasser oder eine andere Flüssigkeit aus großer Tiefe (beispielsweise aus über 100 m Tiefe) an die Oberfläche gefördert werden kann. Ebenso denkbar ist auch, dass die weitere Einrichtung ein Generator zum Erzeugen von elektrischem Strom ist.

Die Erfindung betrifft auch eine Bewässerungsvorrichtung, die wenigstens eine erfindungsgemäße Pumpvorrichtung aufweist. Weiters weist die Bewässerungsvorrichtung wenigstens eine Zuleitung, über die die Pumpvorrichtung/en mit einem Wasserreservoir verbindbar ist/sind, wenigstens eine Wasserverteileinrichtung und wenigstens eine Ableitung, über die die Pumpvorrichtung/en mit der/den Wasserverteileinrichtung/en verbunden ist/sind, auf.

Das Wasserreservoir kann beispielsweise ein Teich, ein See, das Grundwasser oder ein künstlicher Tank bzw. ein Becken sein.

Bevorzugt ist, wenn die Bewässerungsvorrichtung wenigstens ein Solarpaneel zum Erzeugen von elektrischem Strom aufweist. Der damit gewonnene Strom kann insbesondere zum Betreiben der Steuereinrichtung und/oder der Wärmeeinrichtung, aber auch für Überwachungs- bzw. Steuerelektronik und/oder zum Laden eines Pufferstromspeichers verwendet werden.

Im Rahmen der Erfindung kann auch ein Verfahren zum Betreiben einer Pumpvorrichtung vorgesehen sein, wobei dieses Verfahren ausgewählte oder alle Merkmale einer erfindungsgemäße Pumpvorrichtung - wie vorangehend beschrieben - aufweisen kann.

Weitere Einzelheiten, Merkmale und Vorteile der Erfindung ergeben sich aus der nachstehenden Beschreibung unter Bezugnahme auf die angeschlossenen Zeichnungen, in welchen bevorzugte Ausführungsformen dargestellt sind. Es zeigt:
- Fig. 1: eine Seitenansicht der erfindungsgemäßen Pumpvorrichtung gemäß einer ersten Ausführungsform,
- Fig. 2: eine Draufsicht auf die entlang der Schnittebene II-II geschnittene erfindungsgemäße Pumpvorrichtung der Fig. 1,
- Fig. 3: eine Seitenansicht der erfindungsgemäßen Pumpvorrichtung gemäß einer zweiten Ausführungsforme,
- Fig. 4: eine Draufsicht auf die entlang der Schnittebene IV-IV geschnittene erfindungsgemäße Pumpvorrichtung der Fig. 3,
- Fig. 5: eine Seitenansicht der erfindungsgemäßen Pumpvorrichtung gemäß einer dritten Ausführungsform, und
- Fig. 6: einen um Details ergänzten Längsschnitt durch die erfindungsgemäße Pumpvorrichtung der Fig. 5.

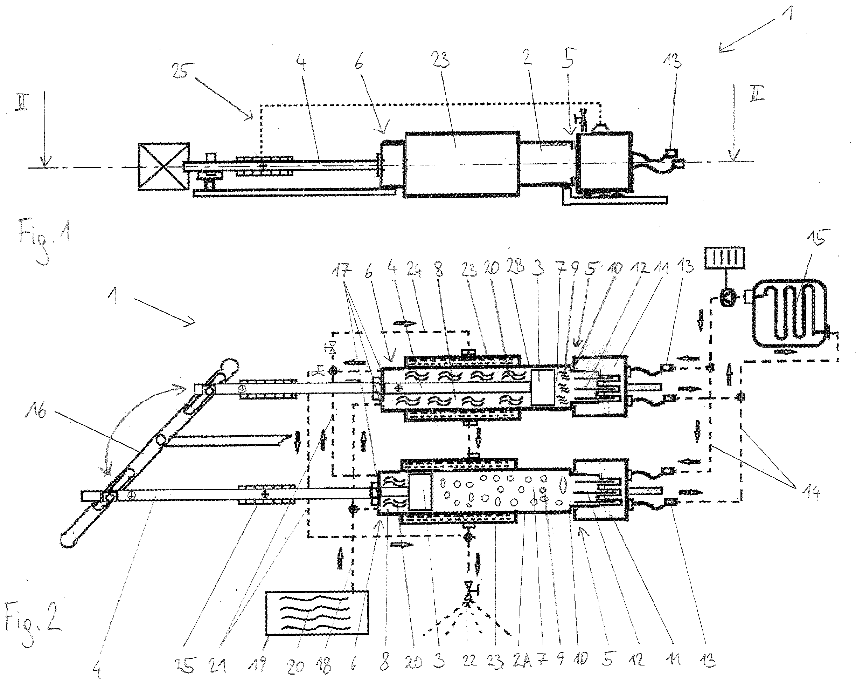

Die Fig. 1 und 2 zeigen eine erfindungsgemäße Pumpvorrichtung 1 gemäß einer ersten Ausführungsform, bei der die zum Betreiben der Pumpvorrichtung 1 notwendige Wärme mit Hilfe von Solarstrom bereitgestellt wird.

Die Pumpvorrichtung 1 weist einen ersten Zylinder 2A und einen zweiten Zylinder 2B auf, die im Wesentlichen gleich ausgerichtet und parallel nebeneinander verlaufend angeordnet sind. In jedem der Zylinder 2A, 2B ist ein Kolben 3 geführt, der jeweils mit einer zugeordneten Kolbenstange 4 verbunden ist.

Jeder der Zylinder 2A, 2B weist ein vorderes Ende 5 und ein hinteres Ende 6 auf, wobei zwischen dem Kolben 3 und dem vorderen Ende 5 jeweils eine Arbeitskammer 7 und zwischen dem Kolben 3 und dem hinteren Ende 6 jeweils eine Pumpkammer 8 gebildet ist.

In der Arbeitskammer 7 jedes Zylinders 2A, 2B ist ein Arbeitsfluid 9 aufgenommen, das sich bei der Zufuhr von Wärme ausdehnt, den jeweiligen Kolben 3 zum hinteren Ende 6 hin verschiebt und somit das Volumen der Arbeitskammer 7 vergrößert.

Im Bereich des vorderen Endes 5 ist im Zylinder 2A, 2B eine Innenschulter 10 ausgebildet, an der der Kolben 3 in seiner Endposition - in der er nicht weiter zum vorderen Ende 5 hin geschoben werden kann - anliegt. Die Arbeitskammer 7 eines Zylinders 2A, 2B hat somit, wenn sich der Kolben 3 in der Endposition befindet, das kleinstmögliche Volumen.

Dem Arbeitsfluid 9 kann über eine dafür vorgesehene Wärmeeinrichtungen 11 im Bereich des vorderen Endes 5 jedes Zylinders 2A, 2B Wärme zugeführt werden. Die Wärmeeinrichtungen 11 weisen in der dargestellten Ausführungsform elektrische Heizelemente auf, deren Heizspulen 12 in die Arbeitskammern 7 hineinragen. Über Stromanschlüsse 13 werden die Wärmeeinrichtungen 11 - und somit die Heizspulen 12 - mit elektrischem Strom versorgt, sodass die vom Strom durchflossenen Heizspulen 12 dem Arbeitsfluid 9 Wärme zuführen.

Die Stromanschlüsse 13 sind über Stromleitungen 14 mit einem Solarpaneel 15, das Solarstrom erzeugt, verbunden.

Die Kolbenstangen 4 der Zylinder 2A, 2B sind über ein verschwenkbares Gestänge 16 derart miteinander gekoppelt, dass durch das Ausfahren der einen Kolbenstange 4 die andere Kolbenstange 4 automatisch eingefahren wird und umgekehrt. Dementsprechend bewegt sich auch der Kolben 3 des ersten Zylinders 2A zum vorderen Ende 5 hin, wenn der Kolben 3 des zweiten Zylinders 2B durch das sich ausdehnende Arbeitsfluid 9 zum hinteren Ende 6 verschoben wird und umgekehrt.

Die Pumpkammer 8 eines jeden Zylinders 2A, 2B weist zwei Leitungsanschlüsse 17 auf. Einer der Leitungsanschlüsse 17 ist jeweils über eine Zuleitung 18 mit einem Flüssigkeitsreservoir, insbesondere ein Wasserreservoir 19, einer Pumpflüssigkeit 20 verbunden. Der andere Leitungsanschluss 17 ist jeweils über eine Ableitung 21 mit einer Flüssigkeitsverteileinrichtung, insbesondere eine Wasserverteileinrichtung 22, zum Verteilen bzw. Abgeben der Pumpflüssigkeit 20 verbunden.

Der mit der Zuleitung 18 verbundene Leitungsanschluss 17 weist ein Rückschlagventil auf, das verhindert, dass Pumpflüssigkeit 20 aus der Pumpkammer 8 in die Zuleitung 18 fließen kann. Im Gegenzug dazu weist der mit der Ableitung 21 verbundene Leitungsanschluss 17 ein Rückschlagventil auf, das verhindert, dass Pumpflüssigkeit 20 aus der Ableitung 21 in die Pumpkammer 8 gesaugt werden kann.

Jeder der Zylinder 2A, 2B ist von einer Kühleinrichtung 23 ummantelt, die vom vorderen Ende 5 des Zylinders 2A, 2B beabstandet ist. Somit muss der Kolben 3 erst eine bestimmte Strecke vom vorderen Ende 5 zum hinteren Ende 6 des Zylinders 2A, 2B hin verschoben werden, damit die Arbeitskammer 7 sich bis zur Kühleinrichtung 23 erstreckt und durch diese gekühlt werden kann.

Die Kühleinrichtungen 23 sind über eine Kühlleitung 24 mit der Ableitung 21 verbunden bzw. direkt in die Ableitung 21 integriert.

Eine elektrische Steuereinrichtung 25 ist mit den Kolben 3 bzw. Kolbenstangen 4 gekoppelt, sodass die Stromzufuhr für die Wärmeeinrichtung 11 eines jeden Zylinders 2A, 2B unterbrochen wird, sobald der Kolben 3 dieses Zylinders 2A, 2B in den Bereich des hinteren Endes 6 verschoben ist. Beispielsweise kann die Steuereinrichtung 25 Sensoren aufweisen, um zu messen, wie weit die jeweilige Kolbenstange 4 aus dem Zylinder 2A, 2B ausgefahren ist.

Ein Pumpvorgang mit der erfindungsgemäßen Pumpvorrichtung läuft z.B. wie folgt ab:
Der Kolben 3 des ersten Zylinders 2A ist in seiner Endposition am vorderen Ende 5 des ersten Zylinders 2A angeordnet und liegt an der Innenschulter 10 an. Das Arbeitsfluid 9 ist in einem flüssigen, im Wesentlichen unausgedehnten Zustand, in dem es keinen Druck auf den Kolben ausübt.

Über die Wärmeeinrichtung 11 des ersten Zylinders 2A wird dem Arbeitsfluid 9 des ersten Zylinders 2A Wärme zugeführt, sodass dieses zumindest teilweise verdampft und sich ausdehnt.

Der Kolben 3 des ersten Zylinders 2A wird aufgrund des Überdruckes in der Arbeitskammer in Richtung hinteres Ende 6 des ersten Zylinders 2A verschoben. Dadurch wird die in der Pumpkammer 8 aufgenommene Pumpflüssigkeit 20 durch den mit der Ableitung 21 verbundenen Leitungsanschluss 17 aus der Pumpkammer 8 hinausgepresst, und über die Ableitung 21 und die Kühleinrichtungen 23 zur Wasserverteileinrichtung 22 geleitet.

Gleichzeitig fährt die Kolbenstange des ersten Zylinders 2A aus dem ersten Zylinder 2A heraus, sodass die Steuereinrichtung 25 die Stromzufuhr zur Wärmeeinrichtung 11 des ersten Zylinders 2A und somit auch die Wärmezufuhr zum Arbeitsfluid 9 des ersten Zylinders 2A unterbricht.

Durch das Herausfahren der Kolbenstange 4 des ersten Zylinders 2A wird über das verschwenkbare Gestänge 16 die Kolbenstange 4 des zweiten Zylinders 2B in den zweiten Zylinder 2B hineingefahren.

Durch das Hineinfahren der Kolbenstange 4 des zweiten Zylinders 2B wird der Kolben 3 im zweiten Zylinder 2B in Richtung zum vorderen Ende 5 des zweiten Zylinders 2B verschoben, wodurch in der Pumpkammer 8 des zweiten Zylinders 2B ein Unterdruck entsteht. Aufgrund dieses Unterdruckes wird die Pumpflüssigkeit 20 über die Zuleitung 18, die an einem der Leitungsanschlüsse 17 angeschlossen ist, aus dem Wasserreservoir 19 in die Pumpkammer 8 des zweiten Zylinders 2B hinein gesaugt.

Wenn der Kolben 3 des zweiten Zylinders 2B in seiner Endposition im Bereich des vorderen Endes 5 des zweiten Zylinders 2B ist, stellt die Steuereinrichtung 25 die davor unterbrochene Stromzufuhr für die Wärmeeinrichtung 11 des zweiten Zylinders 2B wieder her.

Dadurch wird nunmehr dem Arbeitsfluid 9 des zweiten Zylinders 2B Wärme zugeführt und der beschriebene Pumpvorgang läuft in gleicher Weise wie beschrieben, nur in umgekehrter Reihenfolge, ab.

Damit das Arbeitsfluid 9 in den Zylindern 2A, 2B im ausgedehnten Zustand rascher abkühlt und der jeweilige Kolben 3 schneller wieder zum vorderen Ende 5 des jeweiligen Zylinders 2A, 2B hin verschoben werden kann, wird dem Arbeitsfluid 9 über die Kühleinrichtungen 23 Wärme entzogen, sobald die jeweilige Arbeitskammer 7 ein vorbestimmtes Volumen bzw. eine vorbestimmte Größe erreicht hat.

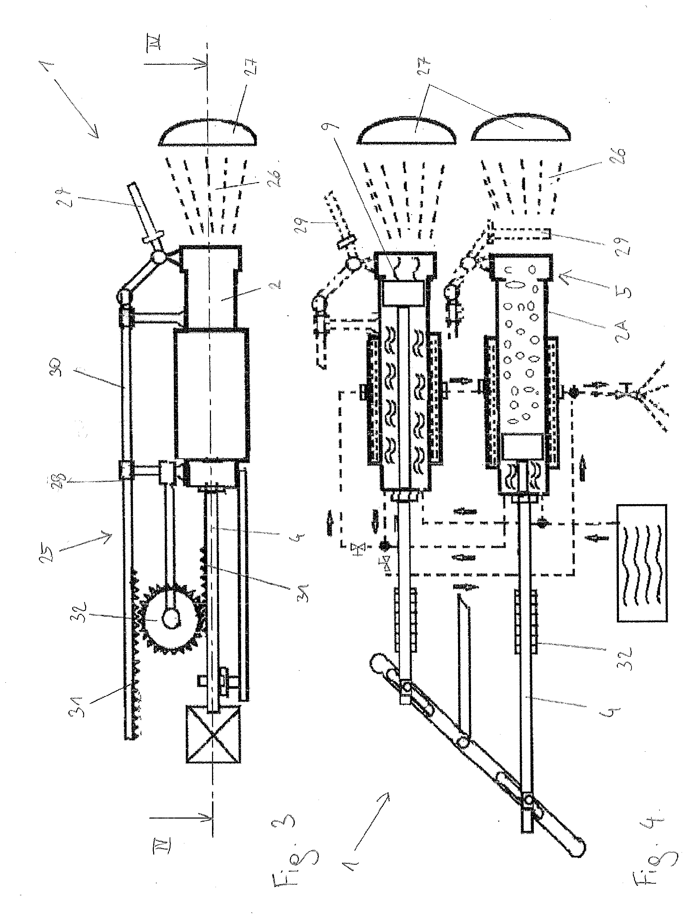

Die Fig. 3 und 4 zeigen die erfindungsgemäße Pumpvorrichtung 1 gemäß einer zweiten Ausführungsform, bei der die zum Betreiben der Pumpvorrichtung 1 notwendige Wärme mit Hilfe von Sonnenstrahlen 26 erzeugt wird.

Die Pumpvorrichtungen 1 der ersten und der zweiten Ausführungsform sind im Wesentlichen gleich aufgebaut, unterscheiden sich jedoch in der Ausgestaltung der Wärmeeinrichtung 11 und der Steuereinrichtung 25.

Die Wärmeeinrichtungen 11 der in den Fig. 3 und 4 dargestellten Pumpvorrichtung 1 weisen Linsen 27 auf, mit deren Hilfe Sonnenstrahlen 26 auf die vorderen Enden 5 der Zylinder 2A, 2B gebündelt werden können. Jedem Zylinder 2A, 2B ist dafür wenigstens eine Linse 27 zugeordnet.

Das vordere Ende 5 der Zylinder 2A, 2B weist in dieser Ausführungsform eine besonders hohe Wärmeleitfähigkeit auf, sodass dem Arbeitsfluid 9 in den Zylindern 2A, 2B ein Großteil der durch die Bündelung der Sonnenstrahlen 26 erzeugten Wärme zugeführt werden kann.

Die Steuereinrichtung 25 weist bei der in den Fig. 3 und 4 dargestellten Ausführungsform pro Zylinder 2A, 2B eine mit den Kolbenstangen 4 gekoppelte Steuermechanik 28 und eine verschwenkbar Abschirmung 29 auf. Beim Ausfahren der Kolbenstange 4 aus dem Zylinder 2A, 2B wird die jeweilige Abschirmung 29 zwischen das vordere Ende 5 des Zylinders 2A, 2B und die zugeordnete Linse 27 verschwenkt, sodass keine Sonnenstrahlen 26 auf das vordere Ende 5 auftreffen und dieses erwärmen können. Die Wärmezufuhr an das Arbeitsfluid 9 des betroffenen Zylinders 2A, 2B wird somit unterbunden.

Die Steuermechanik 28 jedes Zylinders 2A, 2B umfasst in der dargestellten Ausführungsform ein mit den Kolbenstangen 4 gekoppeltes Gestänge 28, das mit Hilfe von Zahnschienen 31 und eines Zahnrades 32 gegengleich zur Kolbenstange 4 des entsprechenden Zylinders 2A, 2B bewegt wird.

In den Ausführungsformen, die in den Fig. 1 bis 4 dargestellt sind, ist die Pumpvorrichtung 1 als Teil einer Bewässerungsvorrichtung dargestellt. Möglich ist jedoch auch, dass die Pumpvorrichtung 1 Teil eines anderen Flüssigkeitssystems, z.B. einer Trinkwasserversorgung, eines Ölkreislaufes, eines Badewasserkreislaufes usw., ist.

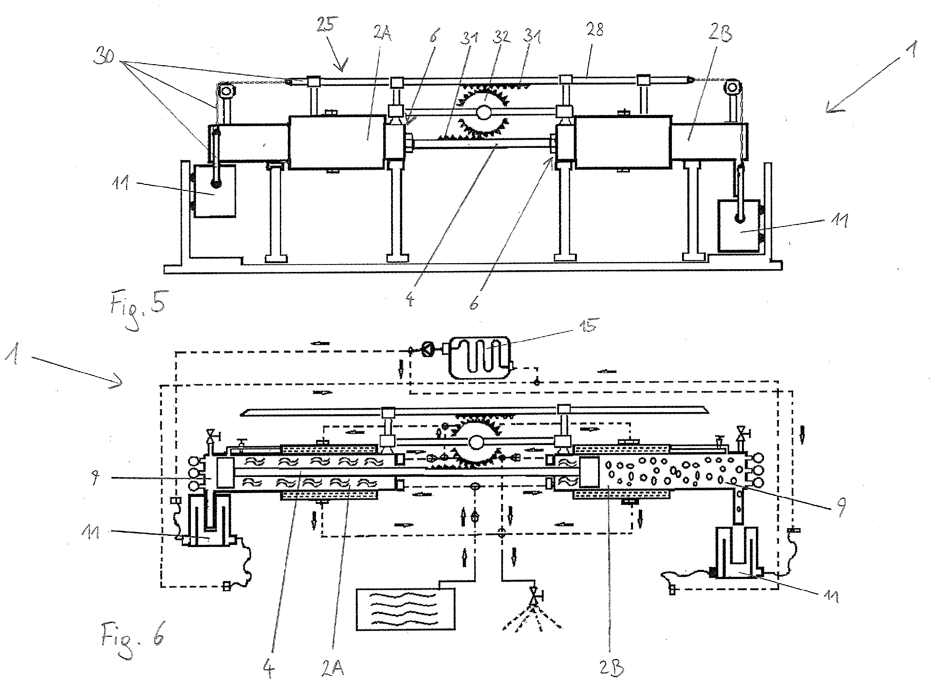

Die Fig. 5 und 6 zeigen die erfindungsgemäße Pumpvorrichtung 1 gemäß einer dritten Ausführungsform. Auch bei dieser Ausführungsform wird die zum Betreiben der Pumpvorrichtung 1 notwendige Wärme - wie bei der in den Fig. 1 und 2 dargestellten Ausführungsform - mit Hilfe von Solarstrom, der über ein Solarpaneel 15 gewonnen wird, bereitgestellt.

Die Zylinder 2A, 2B der Pumpvorrichtung 1 sind bei dieser Ausführungsform in einer Linie und gegengleich zueinander ausgerichtet, sodass das hintere Ende 6 jedes Zylinders 2A, 2B zum hinteren Ende des anderen Zylinders 2B, 2A hinweist.

Die Kolbenstangen 4 der in den Zylindern 2A, 2B geführten Kolben 3 sind miteinander verbunden, und bilden eine einzige gemeinsame Kolbenstange 4.

Beim Verschieben der gemeinsamen Kolbenstange 4 aus dem einen der Zylinder 2A heraus wird sie direkt in den anderen Zylinder 2B hineingeschoben und vice versa, ohne dass dafür ein verschwenkbares Gestänge 16 benötigt wird.

Die Steuereinrichtung 25 weist eine mit der Kolbenstange 4 gekoppelte, gemeinsame Steuermechanik 28 auf, die mit den Wärmeeinrichtungen 11 beider Zylinder 2A, 2B verbunden ist.

Die Wärmeeinrichtung 11, die jenem Zylinder 2A, 2B zugeordnet ist, aus dem die gemeinsame Kolbenstange 4 herausgeschoben wird, wird vom Zylinder 2A, 2B entfernt, insbesondere abgesenkt. Somit ist die Wärmezufuhr an das Arbeitsfluid 9 dieses Zylinders 2A, 2B unterbunden. Gleichzeitig wird die dem anderen Zylinder 2B, 2A zugeordnete Wärmeeinrichtung 11 an diesen anderen Zylinder 2B, 2A, in den die gemeinsame Kolbenstange 4 hineingeschoben wird, herangeführt, insbesondere angehoben. Die Wärmeeinrichtung 11 kann somit Wärme an das Arbeitsfluid 9 des anderen Zylinders 2b, 2A abgeben.

Die gemeinsame Steuermechanik 28 der Zylinder 2A, 2B umfasst in der dargestellten Ausführungsform ein mit der gemeinsamen Kolbenstange 4 gekoppeltes Gestänge 30 mit Ketten, das mit Hilfe von Zahnschienen 31 und eines Zahnrades 32 gegengleich zur gemeinsamen Kolbenstange 4 bewegt wird.

Die Erfindung ist nicht auf die dargestellten Ausführungsformen beschränkt. Insbesondere sind weitere Ausführungsformen denkbar, die bestimmte Merkmale der in den Figuren 1 bis 6 dargestellten Pumpvorrichtungen 1 kombinieren.

Beispielsweise kann eine erfindungsgemäße Pumpvorrichtung 1, bei der die Zylinder 2A, 2B wie in der in den Fig. 5 und 6 dargestellten Ausführungsform gegengleich und in einer Linie angeordnet sind, eine elektrische Steuereinrichtung 25, wie in den Fig. 1 und 2 dargestellt, aufweisen. Bei einer derartigen Pumpvorrichtung 1 sind die Wärmeeinrichtungen 11 vorzugsweise dauerhaft an den vorderen Enden 5 der Zylinder 2A, 2B angeordnet. Die Stromzufuhr zu den Wärmeeinrichtungen 11 wird durch die elektrische Steuereinrichtung 25 - je nach Position der gemeinsamen Kolbenstange 4 - unterbrochen oder freigegeben.

### Bezugszeichenliste

- 1: Pumpvorrichtung
- 2: (A, B) Zylinder (erster, zweiter)
- 3: Kolben
- 4: Kolbenstange
- 5: vorderes Ende
- 6: hinteres Ende
- 7: Arbeitskammer
- 8: Pumpkammer
- 9: Arbeitsfluid
- 10: Innenschulter
- 11: Wärmeeinrichtung
- 12: Heizspule
- 13: Stromanschluss
- 14: Stromleitung
- 15: Solarpaneel
- 16: verschwenkbares Gestänge
- 17: Leitungsanschluss
- 18: Zuleitung
- 19: Wasserreservoir
- 20: Pumpflüssigkeit
- 21: Ableitung
- 22: Wasserverteileinrichtung
- 23: Kühleinrichtung
- 24: Kühlleitung
- 25: Steuereinrichtung
- 26: Sonnenstrahlen
- 27: Linse
- 28: Steuermechanik
- 29: Abschirmung
- 30: Gestänge der Steuereinrichtung
- 31: Zahnschienen
- 32: Zahnrad

## Patentansprüche

1. Pumpvorrichtung (1), insbesondere zum Pumpen von Wasser, mit wenigstens einem ersten Zylinder (2A) und einem zweiten Zylinder (2B), in denen jeweils ein Kolben (3) mit einer damit verbundenen Kolbenstange (4) verschiebbar geführt ist, wobei jeder der Zylinder (2A, 2B) ein vorderes Ende (5) und ein hinteres Ende (6) aufweist, wobei die Kolbenstangen (4) jeweils am hinteren Ende (6) aus den Zylindern (2A, 2B) austreten und derart miteinander gekoppelt sind, dass ein Verschieben des Kolbens (3) eines der Zylinder (2A, 2B) zum hinteren Ende (6) dieses Zylinders (2A, 2B) hin ein Verschieben des Kolbens (3) des anderen Zylinders (2B, 2A) zu dessen vorderen Ende (5) hin bewirkt und umgekehrt, und wobei jeweils im Bereich des hinteren Endes (6) wenigstens ein Leitungsanschluss (17) in jeden der Zylinder (2A, 2B) führt, **dadurch gekennzeichnet, dass** in den Zylindern (2A, 2B) jeweils zwischen dem Kolben (3) und dem vorderen Ende (5) ein Arbeitsfluid (9), dem im Bereich des vorderen Endes (5) über eine Wärmeeinrichtung (11) Wärme zuführbar ist, aufgenommen ist und dass die Zufuhr der Wärme durch eine Steuereinrichtung (25) derart gesteuert ist, dass die Wärmezufuhr an das Arbeitsfluid (9) des einen Zylinders (2A, 2B) unterbrochen ist, während dem Arbeitsfluid (9) des anderen Zylinders (2B, 2A) Wärme zugeführt wird, und umgekehrt.

2. Pumpvorrichtung nach Anspruch 1, **dadurch gekennzeichnet, dass** die Steuereinrichtung (25) mit den Kolben (3) bzw. Kolbenstangen (4) derart gekoppelt ist, dass bei jedem der Zylinder (2A, 2B) beim Verschieben des darin geführten Kolbens (3) zum hinteren Ende (6) die Wärmezufuhr an das Arbeitsfluid (9) dieses Zylinders (2A, 2B) unterbrochen und beim Verschieben des Kolbens (3) zum vorderen Ende (5) die Wärmezufuhr freigegeben ist.

3. Pumpvorrichtung nach Anspruch 1 oder 2, **dadurch gekennzeichnet, dass** die Wärmeeinrichtung (11) die Wärme mit Hilfe von Solarenergie bereitstellt.

4. Pumpvorrichtung nach einem der Ansprüche 1 bis 3, **dadurch gekennzeichnet, dass** die Wärmeeinrichtung (11) ein am vorderen Ende (5) des jeweiligen Zylinders (2A, 2B) angeordnetes, elektrisch betriebenes Heizelement aufweist, und dass durch die Steuereinrichtung (25) die Stromzufuhr zum Heizelement unterbrechbar bzw. herstellbar ist, insbesondere dass das Heizelement eine mit Hilfe von elektrischem Strom erhitzbare Heizspule (12) oder ein mit Hilfe von elektrischem Strom in Schwingung versetzbares Schwingelement aufweist.

5. Pumpvorrichtung nach einem der Ansprüche 1 bis 3, **dadurch gekennzeichnet, dass** die Wärmeeinrichtung (11) ein bewegliches Heizelement aufweist, das durch die Steuereinrichtung (25) an dem vorderen Ende (5) anordenbar ist, sodass Wärme vom Heizelement über das vordere Ende (5) dem Arbeitsfluid (9) zuführbar ist, oder durch Entfernen des Heizelementes die Zufuhr von Wärme unterbrechbar ist, oder dass die Wärmeeinrichtung (11) wenigstens ein Sammelelement, wie beispielsweise einen konkaven Spiegel oder eine Linse (27), aufweist, mit welchem dem vorderen Ende (5) Sonnenstrahlen (26) zuführbar sind, sodass sich das vordere Ende (5) erwärmt und Wärme an das Arbeitsfluid (9) abgibt, und dass durch die Steuereinrichtung (25) die Zufuhr von Sonnenstrahlen (26) unterbrechbar ist, insbesondere indem eine Abschirmung (29) zwischen dem vorderen Ende (5) und dem Sammelelement platziert wird.

6. Pumpvorrichtung nach einem der Ansprüche 1 bis 5, **dadurch gekennzeichnet, dass** die Steuereinrichtung (25) mechanisch, insbesondere über ein Gestänge (39) und/oder Zahnräder (32) und/oder Riemen und/oder einen Seilzug, oder elektrisch bzw. elektronisch mit den Kolben (3) bzw. Kolbenstangen (4) gekoppelt ist.

7. Pumpvorrichtung nach einem der Ansprüche 1 bis 6, **dadurch gekennzeichnet, dass** beabstandet vom vorderen Ende (5) an oder um jeden der Zylinder (2A, 2B) eine Kühleinrichtung (23) angeordnet ist, mit der dem Arbeitsfluid (9) Wärme entziehbar ist.

8. Pumpvorrichtung nach einem der Ansprüche 1 bis 7, **dadurch gekennzeichnet, dass** das Arbeitsfluid (9) bei zugeführter Wärme zumindest teilweise gasförmig und bei entzogener Wärme zumindest teilweise flüssig ist oder dass das Arbeitsfluid (9) bei zugeführter und entzogener Wärme im Wesentlichen gasförmig ist oder dass das Arbeitsfluid (9) bei zugeführter und entzogener Wärme im Wesentlichen flüssig ist.

9. Pumpvorrichtung nach einem der Ansprüche 1 bis 8, **dadurch gekennzeichnet, dass** in jedem der Zylinder (2A, 2B) zwischen dem Kolben (3) und dem vorderen Ende (5) ein Unterdruck vorherrscht, wenn der Kolben (3) des jeweiligen Zylinders (2A, 2B) in einer Endposition im Bereich des vorderen Endes (5) angeordnet und das Arbeitsfluid (9) in einem unausgedehnten Zustand ist.

10. Pumpvorrichtung nach einem der Ansprüche 1 bis 9, **dadurch gekennzeichnet, dass** die Zylinder (2A, 2B) gleich ausgerichtet, insbesondere nebeneinander angeordnet, oder gegengleich ausgerichtet, insbesondere in einer Linie angeordnet, sind.

11. Pumpvorrichtung nach einem der Ansprüche 1 bis 10, **dadurch gekennzeichnet, dass** die Kolbenstangen (4) über ein bewegliches Gestänge (16) und/oder Zahnräder und/oder Riemen und/oder einen Seilzug miteinander gekoppelt sind, oder dass die Kolbenstangen (4) über eine im Wesentlichen starre Kupplung bzw. ein starres Gestänge direkt miteinander gekoppelt sind oder dass die Kolbenstangen (4) jeweils ein Teilabschnitt einer einzigen Kolbenstange (4) sind.

12. Pumpvorrichtung nach einem der Ansprüche 1 bis 11, **dadurch gekennzeichnet, dass** ein einzelner Leitungsanschluss (17) pro Zylinder (2A, 2B) vorhanden ist, an dem eine Zwischenleitung angeschlossen ist, die mit einer Zuleitung (18), über die eine Pumpflüssigkeit (20) ansaugbar ist, und einer Ableitung (21), über die die Pumpflüssigkeit (29) ableitbar ist, verbindbar ist, oder dass wenigstens zwei Leitungsanschlüsse (17) vorhanden sind, wobei einer der Leitungsanschlüsse (17) mit einer Zuleitung (18), über die eine Pumpflüssigkeit (20) ansaugbar, und der andere der Leitungsanschlüsse (17) mit einer Ableitung (21), über die die Pumpflüssigkeit (20) ableitbar ist, verbindbar ist.

13. Pumpvorrichtung nach einem der Ansprüche 1 bis 12, **dadurch gekennzeichnet, dass** ein Rückschlagventil die Zuleitung (18) beim Verschieben des Kolbens (3) zum hinteren Ende (6) blockiert, und dass ein weiteres Rückschlagventil die Ableitung (21) beim Verschieben des Kolbens (3) zum vorderen Ende (5) hin blockiert.

14. Pumpvorrichtung nach einem der Ansprüche 1 bis 13, **dadurch gekennzeichnet, dass** die Kolbenstangen (4) derart mechanisch mit wenigstens einer weiteren Einrichtung, wie beispielsweise einer Gestängepumpe oder einem Generator, verbunden sind, dass diese weitere Einrichtung durch die Bewegung der Kolbenstangen (4) antreibbar bzw. betreibbar ist.

15. Bewässerungsvorrichtung, die wenigstens eine
Pumpvorrichtung (1), wenigstens eine Zuleitung (18), über die die Pumpvorrichtung/en (1) mit einem Wasserreservoir (19) verbindbar ist/sind, wenigstens eine Wasserverteileinrichtung (22) und wenigstens eine Ableitung (21), über die die Pumpvorrichtung/en (1) mit der/den Wasserverteileinrichtung/en (22) verbunden ist/sind, aufweist und die bevorzugt wenigstens ein Solarpaneel (15) zum Erzeugen von elektrischem Strom aufweist, **dadurch gekennzeichnet, dass** die Pumpvorrichtung/en (1) nach einem der Ansprüche 1 bis 14 ausgebildet ist/sind.

## Claims

1. Pumping device (1), in particular for pumping water, having at least one first cylinder (2A) and one second cylinder (2B), in each of which a piston (3) with a piston rod (4) connected thereto is displaceably guided, each of the cylinders (2A, 2B) having a front end (5) and a rear end (6), wherein the piston rods (4) each emerge from the cylinders (2A, 2B) at the rear end (6) and are coupled to one another in such a way that a displacement of the piston (3) of one of the cylinders (2A, 2B) towards the rear end (6) of this cylinder (2A, 2B) causes a displacement of the piston (3) of the other cylinder (2B, 2A) towards its front end (5) and vice versa, and wherein at least one line connection (17) leads into each of the cylinders (2A, 2B) in the region of the rear end (6), **characterized in that** a working fluid (9), to which heat can be supplied via a heating device (11) in the region of the front end (5), is accommodated in the cylinders (2A, 2B) in each case between the piston (3) and the front end (5), and **in that** the supply of heat is controlled by a control device (25) in such a way that the supply of heat to the working fluid (9) of one cylinder (2A, 2B) is interrupted while heat is supplied to the working fluid (9) of the other cylinder (2B, 2A), and vice versa.

2. Pumping device according to claim 1, **characterized in that** the control device (25) is coupled to the pistons (3) or piston rods (4) in such a way that in each of the cylinders (2A, 2B), when the piston (3) guided therein is displaced to the rear end (6), the heat supply to the working fluid (9) of this cylinder (2A, 2B) is interrupted and, when the piston (3) is displaced to the front end (5), the heat supply is released.

3. Pumping device according to claim 1 or 2, **characterized in that** the heating device (11) provides the heat with the aid of solar energy.

4. Pumping device according to one of claims 1 to 3, **characterized in that** the heating device (11) has an electrically operated heating element arranged at the front end (5) of the respective cylinder (2A, 2B), and **in that** the power supply to the heating element can be interrupted or established by the control device (25), in particular **in that** the heating element has a heating coil (12) which can be heated with the aid of electric current or an oscillating element which can be set in oscillation with the aid of electric current.

5. Pumping device according to one of claims 1 to 3, **characterized in that** the heating device (11) has a movable heating element which can be arranged at the front end (5) by the control device (25), so that heat from the heating element can be supplied to the working fluid (9) via the front end (5), or the supply of heat can be interrupted by removing the heating element, or **in that** the heating device (11) has at least one collecting element, such as a concave mirror or a lens (27), with which solar rays (26) can be supplied to the front end (5), so that the front end (5) heats up and emits heat to the working fluid (9), and **in that** the supply of solar rays (26) can be interrupted by the control device (25), in particular by placing a shield (29) between the front end (5) and the collecting element.

6. Pumping device according to one of claims 1 to 5, **characterized in that** the control device (25) is coupled mechanically, in particular via a linkage (39) and/or gear wheels (32) and/or belts and/or a cable pull, or electrically or electronically to the pistons (3) or piston rods (4).

7. Pumping device according to one of claims 1 to 6,
**characterized in that** a cooling device (23) is arranged at a distance from the front end (5) at or around each of the cylinders (2A, 2B), with which cooling device heat can be extracted from the working fluid (9).

8. Pumping device according to one of claims 1 to 7,
**characterized in that** the working fluid (9) is at least partially gaseous when heat is supplied and at least partially liquid when heat is removed, or **in that** the working fluid (9) is essentially gaseous when heat is supplied and removed, or **in that** the working fluid (9) is essentially liquid when heat is supplied and removed.

9. Pumping device according to one of claims 1 to 8,
**characterized in that** a negative pressure prevails in each of the cylinders (2A, 2B) between the piston (3) and the front end (5) when the piston (3) of the respective cylinder (2A, 2B) is arranged in an end position in the region of the front end (5) and the working fluid (9) is in an unexpanded state.

10. Pumping device according to one of claims 1 to 9,
**characterized in that** the cylinders (2A, 2B) are aligned in the same way, in particular arranged next to each other, or are aligned in opposite ways, in particular arranged in a line.

11. Pumping device according to one of claims 1 to 10, **characterized in that** the piston rods (4) are coupled to one another via a movable linkage (16) and/or gear wheels and/or belts and/or a cable pull, or **in that** the piston rods (4) are coupled directly to one another via an essentially rigid coupling or a rigid linkage, or **in that** the piston rods (4) are each a section of a single piston rod (4).

12. Pumping device according to one of claims 1 to 11,
**characterized in that** a single line connection (17) is present per cylinder (2A, 2B), to which an intermediate line is connected, which can be connected to a supply line (18), via which a pumping liquid (20) can be sucked in, and a discharge line (21), via which the pumping liquid (29) can be discharged, or that at least two line connections (17) are present, wherein one of the line connections (17) can be connected to a supply line (18), via which a pumping liquid (20) can be sucked in, and the other of the line connections (17) can be connected to a discharge line (21), via which the pumping liquid (20) can be discharged.

13. Pumping device according to one of claims 1 to 12,
**characterized in that** a non-return valve blocks the supply line (18) when the piston (3) is displaced towards the rear end (6), and **in that** a further non-return valve blocks the discharge line (21) when the piston (3) is displaced towards the front end (5).

14. Pump device according to one of claims 1 to 13,
**characterized in that** the piston rods (4) are mechanically connected to at least one further device, such as a rod pump or a generator, in such a way that this further device can be driven or operated by the movement of the piston rods (4).

15. Irrigation device comprising at least one pumping device (1), at least one supply line (18) via which the pumping device(s) (1) can be connected to a water reservoir (19), at least one water distribution device (22) and at least one discharge line (21), via which the pumping device(s) (1) is/are connected to the water distribution device(s) (22), and which preferably has at least one solar panel (15) for generating electric current, **characterized in that** the pumping device(s) (1) is/are designed according to one of claims 1 to 14.

## Revendications

1. Dispositif de pompage (1), en particulier pour pomper de l'eau, comprenant au moins un premier cylindre (2A) et un deuxième cylindre (2B), dans chacun desquels un piston (3) auquel est reliée une tige de piston (4) est guidé de manière coulissante, chacun des cylindres (2A, 2B) présentant une extrémité avant (5) et une extrémité arrière (6), les tiges de piston (4) sortant respectivement des cylindres (2A, 2B) à l'extrémité arrière (6) et étant couplées entre elles de telle sorte qu'un coulissement du piston (3) de l'un des cylindres (2A, 2B) vers l'extrémité arrière (6) de ce cylindre (2A, 2B) provoque un coulissement du piston (3) de l'autre cylindre (2B, 2A) vers son extrémité avant (5) et inversement, et au moins un raccord de conduite (17) menant dans chacun des cylindres (2A, 2B) chaque fois dans la zone de l'extrémité arrière (6), **caractérisé en ce qu'**un fluide de travail (9), auquel de la chaleur peut être amenée dans la zone de l'extrémité avant (5) par un moyen de chauffage (11), est contenu dans les cylindres (2A, 2B), chaque fois entre le piston (3) et l'extrémité avant (5), et **en ce que** l'amenée de la chaleur est commandée par un moyen de commande (25) de telle sorte que l'amenée de chaleur au fluide de travail (9) de l'un des cylindres (2A, 2B) est interrompue tandis que de la chaleur est amenée au fluide de travail (9) de l'autre cylindre (2B, 2A), et inversement.

2. Dispositif de pompage selon la revendication 1, **caractérisé en ce que** le moyen de commande (25) est couplé aux pistons (3) ou aux tiges de piston (4) de telle sorte que, pour chacun des cylindres (2A, 2B), lorsque le piston (3) qui y est guidé coulisse vers l'extrémité arrière (6), l'amenée de chaleur au fluide de travail (9) de ce cylindre (2A, 2B) est interrompue et lorsque le piston (3) coulisse vers l'extrémité avant (5), l'amenée de chaleur est libérée.

3. Dispositif de pompage selon la revendication 1 ou 2, **caractérisé en ce que** le moyen de chauffage (11) fournit la chaleur à l'aide d'énergie solaire.

4. Dispositif de pompage selon l'une des revendications 1 à 3, **caractérisé en ce que** le moyen de chauffage (11) présente un élément chauffant fonctionnant électriquement disposé à l'extrémité avant (5) du cylindre respectif (2A, 2B), et **en ce que** l'alimentation en courant de l'élément chauffant peut être interrompue ou établie par le moyen de commande (25), en particulier **en ce que** l'élément chauffant présente une bobine chauffante (12) pouvant être chauffée à l'aide d'un courant électrique ou un élément oscillant pouvant être mis en oscillation à l'aide d'un courant électrique.

5. Dispositif de pompage selon l'une des revendications 1 à 3, **caractérisé en ce que** le moyen de chauffage (11) présente un élément chauffant mobile qui peut être disposé à l'extrémité avant (5) par le moyen de commande (25), de sorte que la chaleur provenant de l'élément chauffant peut être amenée au fluide de travail (9) par l'extrémité avant (5), ou que l'amenée de chaleur peut être interrompue en enlevant l'élément chauffant, ou **en ce que** le moyen de chauffage (11) présente au moins un élément collecteur, par exemple un miroir concave ou une lentille (27), au moyen duquel des rayons solaires (26) peuvent être amenés à l'extrémité avant (5), de sorte que l'extrémité avant (5) se réchauffe et cède de la chaleur au fluide de travail (9), et que l'amenée de rayons solaires (26) peut être interrompue par le moyen de commande (25), en particulier en plaçant un écran (29) entre l'extrémité avant (5) et l'élément collecteur.

6. Dispositif de pompage selon l'une des revendications 1 à 5, **caractérisé en ce que** le moyen de commande (25) est couplé mécaniquement, en particulier par une tringlerie (39) et/ou des roues dentées (32) et/ou des courroies et/ou un câble, ou électriquement ou électroniquement aux pistons (3) ou aux tiges de piston (4).

7. Dispositif de pompage selon l'une des revendications 1 à 6, **caractérisé en ce qu'**à distance de l'extrémité avant (5), sur ou autour de chacun des cylindres (2A, 2B), est disposé un moyen de refroidissement (23) permettant de retirer de la chaleur au fluide de travail (9).

8. Dispositif de pompage selon l'une des revendications 1 à 7, **caractérisé en ce que** le fluide de travail (9) est au moins partiellement gazeux lorsque de la chaleur lui est amenée et au moins partiellement liquide lorsque de la chaleur en est retirée, ou **en ce que** le fluide de travail (9) est sensiblement gazeux lorsque de la chaleur lui est amenée et en est retirée, ou **en ce que** le fluide de travail (9) est sensiblement liquide lorsque de la chaleur lui est amenée et en est retirée.

9. Dispositif de pompage selon l'une des revendications 1 à 8, **caractérisé en ce que** dans chacun des cylindres (2A, 2B), il règne une dépression entre le piston (3) et l'extrémité avant (5) lorsque le piston (3) du cylindre respectif (2A, 2B) est disposé dans une position extrême dans la zone de l'extrémité avant (5) et que le fluide de travail (9) est dans un état non dilaté.

10. Dispositif de pompage selon l'une des revendications 1 à 9, **caractérisé en ce que** les cylindres (2A, 2B) sont orientés dans le même sens, en particulier disposés côte à côte, ou orientés en sens inverse, en particulier disposés en ligne.

11. Dispositif de pompage selon l'une des revendications 1 à 10, **caractérisé en ce que** les tiges de piston (4) sont couplées entre elles par une tringlerie mobile (16) et/ou des roues dentées et/ou des courroies et/ou un câble, ou **en ce que** les tiges de piston (4) sont couplées directement entre elles par un accouplement sensiblement rigide ou une tringlerie rigide, ou **en ce que** les tiges de piston (4) sont chacune un tronçon d'une seule tige de piston (4).

12. Dispositif de pompage selon l'une des revendications 1 à 11, **caractérisé en ce qu'**il existe un seul raccord de conduite (17) par cylindre (2A, 2B), auquel est raccordée une conduite intermédiaire qui peut être reliée à une conduite d'alimentation (18) par laquelle un liquide à pomper (20) peut être aspiré, et à une conduite d'évacuation (21), par laquelle le liquide à pomper (29) peut être évacué, ou **en ce qu'**il existe au moins deux raccords de conduite (17), l'un des raccords de conduite (17) pouvant être relié à une conduite d'alimentation (18) par laquelle un liquide à pomper (20) peut être aspiré, et l'autre des raccords de conduite (17) pouvant être relié à une conduite d'évacuation (21) par laquelle le liquide à pomper (20) peut être évacué.

13. Dispositif de pompage selon l'une des revendications 1 à 12, **caractérisé en ce qu'**un clapet anti-retour bloque la conduite d'alimentation (18) lors du coulissement du piston (3) vers l'extrémité arrière (6), et **en ce qu'**un autre clapet anti-retour bloque la conduite d'évacuation (21) lors du coulissement du piston (3) vers l'extrémité avant (5).

14. Dispositif de pompage selon l'une des revendications 1 à 13, **caractérisé en ce que** les tiges de piston (4) sont reliées mécaniquement à au moins un autre moyen, par exemple une pompe à tiges ou un générateur, de telle sorte que cet autre moyen peut être entraîné ou actionné par le mouvement des tiges de piston (4).

15. Dispositif d'irrigation, qui présente au moins un dispositif de pompage (1), au moins une conduite d'alimentation (18) par laquelle le(s) dispositif(s) de pompage (1) peut/peuvent être relié(s) à un réservoir d'eau (19), au moins un moyen de distribution d'eau (22) et au moins une conduite d'évacuation (21) par laquelle le(s) dispositif(s) de pompage (1) est/sont relié(s) au(x) moyen(s) de distribution d'eau (22) et qui présente de préférence au moins un panneau solaire (15) pour produire du courant électrique, **caractérisé en ce que** le(s) dispositif(s) de pompage (1) est/sont réalisé(s) selon l'une des revendications 1 à 14.
